# EUROPEAN PATENT APPLICATION

(11) **EP 4 421 316 A1**
(43) Date of publication of application: **28.08.2024**
(21) Application number: 23158261.0
(22) Date of filing: 23.02.2023
(51) Int. Cl.: F03D 17/00, F03D 80/30

(54) **A CONDITION MONITORING SYSTEM FOR A WIND TURBINE, A WIND TURBINE, AND A METHOD FOR AN OPERATION MONITORING OF A WIND TURBINE**

(71) Applicant: Polytech A/S, 6740 Bramming (DK)
(72) Inventor: VOGEL, Stephan, 2300 Copenhagen (DK); MADSEN, Søren Find, 4330 Hvalsø (DK); KIEL JENSEN, Ole, 9220 Aalborg (DK); FRANEK, Ondrej, 9220 Aalborg (DK); FRØLUND PETERSEN, Gert, 9220 Aalborg (DK)
(74) Representative: Zacco Denmark A/S

(57) **Abstract**

A condition monitoring system for a wind turbine, with the wind turbine comprising a tower, a nacelle, a hub, and wind turbine blades attached to the hub, wherein each blade comprises an electric conductor system, in particular a lightning protection system, and
wherein the tower, nacelle and hub comprise a stationary electric conductor system, in particular including an electric grounding system of the wind turbine,
comprises:
a controller which is configured to provide input probe signals for injection into the electric conductor system of a blade, when the respective blade is aligned with the tower, and
at least one measurement device configured to detect response signals, which is a system response after injection of the probe signals, wherein the system response is generated by the electric conductor system of the blade and the stationary electric conductor system, which is coupled to the electric conductor system via a capacitive coupling between the blade and the tower, in particular when the blade is aligned with the tower, and
wherein the condition monitoring system is configured to provide the input probe signals for injection into the electric conductor system of a blade every time the blade aligns with the tower or at predefined intervals or on demand when the blade aligns with the tower.

## Description

The present invention relates to a condition monitoring system for a wind turbine according to claim 1, a condition monitoring system according to claim 3, a wind turbine according to claim 19, and a method for an operation monitoring of a wind turbine according to claim 20.

Lightning protection systems of wind turbine blades are usually physical electrical conductors embedded in the structure of the blade. These conductors are typically routed inside the blade and/or are integrated in the shell of the blade.

The integrity of a lightning protection system of a wind turbine is typically validated with a DC continuity measurement between the external receptors of the blade and the blade root. These measurements are typically done after manufacturing, after installation and typically repetitive every two to four years during operation of the turbine.

However, a DC continuity measurement can be misleading as predominantly the path of least resistance determines the result of such a measurement. In case the lightning protection system is characterized by several parallel conductive elements (typically the case, e.g., in carbon fiber reinforced polymer blades, or for blades with additional conductive components equipotentialised to the down conductor), a fault is likely not detected and the blade is in the risk of being severely damaged by the next lightning strike.

Moreover, a DC continuity measurement is labor extensive, governed by HSE (health, safety and/or environment) issues and comparatively slow, as it requires a rope-access from outside of a wind turbine blade. A person needs to rappel down a blade and connect the DC measurement equipment to the outside of the receptors at the tip of the blade to validate whether there is an electrical continuity to the root end of the LPS or not.

These measurements are therefore considered to be rather time-consuming and complex, inflexible and expensive. In addition, they may only take place at discrete single intervals, so that damage that occurs a short time after the last measurement potentially remains unnoticed for a longer period of time.

A condition monitoring device is described in European application no. 21216911.4, filed on 22 December 2021. The content of this application is incorporated herein by way of reference.

In view of the foregoing the objective of the present invention is to provide a condition monitoring device/system that overcomes the aforementioned disadvantages, and allows a straightforward, reliable and operator-friendly status monitoring of a wind turbine blade LPS and interfaces to other conductive components.

The objective of the invention is solved by a condition monitoring system comprising the features of claim 1, a condition monitoring system comprising the features of claim 3 and a method for an operation monitoring of a wind turbine comprising the features of claim 20.

Preferred embodiments of the present invention are described in the dependent claims, in the description and the drawings.

At least in some aspects, the present invention relates to a condition monitoring system for a wind turbine, which comprises a tower, a nacelle, a hub, and wind turbine blades attached to the hub, and with each blade comprising an electric conductor system, in particular a lightning protection system. The tower, nacelle and hub comprise a stationary electric conductor system, in particular including an electric grounding system of the wind turbine. The condition monitoring system comprises a controller which is configured to provide input probe signals for injection into the electric conductor system of a blade, when the respective blade is aligned with the tower, and at least one measurement device configured to detect response signals, which is a system response after injection of the probe signals. The system response is generated by the electric conductor system of the blade and the stationary electric conductor system, which is coupled to the electric conductor system via a capacitive coupling between the blade and the tower, in particular when the blade is aligned with the tower. The condition monitoring system is configured to provide the input probe signals for injection into the electric conductor system of a blade every time the blade aligns with the tower or at predefined intervals or on demand when the blade aligns with the tower.

The condition monitoring system can serve to monitor the condition of an electric conductor system, such as a lightning protection system, of a wind turbine blade by injecting pulses and/or repetitive signals with specific rise-times and in specific frequency ranges into the electric conductor system of the blade, for example into a down conductor of the blade. Subsequently, a signal processing of the detected response signals can be performed (either in the system and/or in a remote computing system). Thereby the condition of the electric conductor system can be determined.

As the condition monitoring system is configured to provide the input probe signals for injection into the electric conductor system of a blade every time the blade aligns with the tower or at predefined intervals or on demand when the blade aligns with the tower, a continuous and automated monitoring of the blades of a wind turbine can be implemented. This can help to enhance the operational safety of the wind turbine.

In feasibility studies it turned out that a return path for the response signals can be important to ensure consistent results. Therefore, the measurements are performed when the blade is aligned with the tower, providing a capacitive coupling between the electric conductor system, in particular the lightning protection system, of the blade and the stationary electric conductor system, for example a grounding system, that runs through the tower and thereby enabling the return-path for the response signal. With this concept, the condition of the electric conductor system of the blades can be validated continuously during the operation of the turbine. Thus, the condition of the wind turbine can also be validated without the need of physical presence of technicians, to avoid the potentially dangerous rope-access operations. In addition, damages that are triggered and progressively develop over time, may be identified early such that repairs can be initiated in due time. Repairing (blades or lightning protection systems of) a wind turbine before damage worsen will save both, repair costs as well a down time of the wind turbine.

A system response can in particular considered to be due to an impedance or a reflection (signal) in the path or system comprising the blade and/or the electric conductor system, such as the lightning protection system, of a blade, the tower conducting unit, and the wireless (in particular capacitive) coupling between these components. It is optional that the tower conducting unit is connected galvanically to the wind turbine, in particular to act as the conductor for returning the signal to the condition monitoring device.

The tower conducting unit can be a part of the stationary electric conductor system. In some embodiments, the tower conducting unit is formed at least sectionally by the exterior of the tower of the wind turbine.

A reproducible (return) path for the signals can be enabled directly by use of the tower of the wind turbine. In particular, the use of the exterior of the tower can be cost-effective, since it is usually made of metal (preferably steel), and/or reinforced concrete and thus a conductor is provided inherently, so that separate or additional conductors need not to be installed. Moreover, with the used coupled electrodes being the tower conducting unit and the electric conducting system of the blade, measurements may not depend on measurements from the ground. Alternatively or additionally, the tower conducting unit can comprise a conductor such as a straight conductive element, or a coaxial cable which can be arranged at the exterior or inside the tower.

In some embodiments, the condition monitoring system can be configured to inject response signals into each blade and to detect response signals for each blade. Thereby, a condition monitoring for each blade can be determined. Furthermore, the system, in particular the controller, can be configured to compare measurements from all blades, and since in operation the blades will always be evenly loaded, a deviation in the measurements from one blade in view of the measurements from the remaining blades can indicate a failure in the blade. Furthermore, by use of the comparisons, the blade that causes the failure can be identified. Such comparisons can be done by the controller or by an external unit.

In some embodiments, the at least one measurement device is configured to provide the detected response signals to the controller for further processing. Alternatively, the at least one measurement device can be configured to provide the detected response signals to an external system, for example to a cloud computing system or a server system or an external computer.

At least in some embodiments, which is also claimed in an independent claim, the condition monitoring system can be configured to provide the input probe signals when the wind turbine operates at a predefined operating condition, for example at a predefined load on the blades or in a predefined operational mode, such as an idle mode, or at a predefined generator output level.

The distance between the blades and the tower can change in dependence on the load on the blades. Thereby, the capacitive coupling between the blades and tower can change in dependence on the load on the blades. Hence, it can be advantageous to detect response signals when the wind turbine operates at predefined operating conditions, since the response signals might be compared with predefined fingerprint signals to identify faults in the electric conductor system of the blades. A fingerprint signal might have been obtained for each blade in response to the injection of an input probe signal, when it was assumed that the blade was not defect and when the wind turbine was operating at the predefined operating conditions.

In some embodiments, the controller is configured to determine an operating condition of the wind turbine. This can be done by use of at least one sensor and/or by use of the output level generated by the wind turbine.

In some embodiments, the controller, for example a measurement unit of the controller, can be configured to process the response signals from all blades. The response signals can be stored by the controller and/or further analysed by the controller.

In some embodiments, the controller is configured to analyse or compare the response signals from all blades, wherein, optionally, the controller is configured to analyse or compare only response signals, which were obtained at least approximately during the same operational conditions of the wind turbine.

In some embodiments, the controller is configured to compare at least a response signal obtained from a blade with a predefined fingerprint signal of the blade. The controller can identify a fault in the blade based on the comparison of the response signal and the fingerprint signal. For example, if the response signal does not correspond to the fingerprint signal, a fault can be identified.

In some embodiments, the controller can be configured to determine, based on the detected response signals for a blade and in particular in dependence on the detection of a change over time of a signal pattern in the response signals of a blade, a fault in the blade. In order to detect a change of a signal pattern over time, historic signals can be stored to have them available for comparison.

In some embodiments, the controller is configured to determine, based on the detected response signals and in particular in dependence on the detection of a change over time of a signal pattern in the response signals, at least one of the following: at least approximately a location of a fault, a time when the fault occurred, a type of the fault. A type of fault can be detected when the response signals are correlated with a schematic of the blade design, and/or when expected response signals that are indicative of a type of fault have been determined before and are provided to the controller. The controller can then identify the type of fault by comparison of the measured response signals with the stored expected response signals.

In some embodiments, the controller comprises a signal generation unit which generates the probe pulses and provides the probe pulses for injection into the electric conductor system of the blade, when it is aligned with the tower.

In some embodiments, the condition monitoring system comprises for each blade a measurement device that is dedicated to the respective blade, wherein, optionally, the measurement device is located at the blade root, at the junction between hub and blade, or in the hub, nacelle or tower.

In some embodiments, the condition monitoring system comprises for each blade a signal generation unit that is dedicated to the respective blade, wherein, optionally, the signal generation unit is located at the blade root, at the junction between hub and blade, or in the hub, nacelle or tower. Alternatively, a single signal generation unit can be employed for all blades. The single signal generation unit can be included in the controller or in a separate housing.

In some embodiments, the condition monitoring system comprises one measurement device for all blades, wherein, optionally, the measurement device is located at the junction between hub and blades, or in the hub, nacelle or tower.

In some embodiments, the at least one measurement device is configured to record/store the detected response signals.

In some embodiments, the controller is located in the hub, in particular in a cabinet.

In some embodiments, the controller, in particular the signal generation unit, is configured to trigger the injection of the probe signals into the electric conductor system of the blade when the respective blade is aligned with the tower.

In some embodiments, the controller is configured to compare a detected response signal with a predetermined fingerprint signal, and to set an alarm if the response signal deviates from the fingerprint signal. This can also be done externally.

In some embodiments, the controller is configured to determine a time delay between the injection of a probe signal and the detection of the corresponding response signal, wherein, optionally, an alarm is set if the time delay exceeds a threshold value. An alarm can be set in many forms, for example an optic or acoustic alarm or by sending an alert to an operator, for example by email, SMS or the like.

In some embodiments, the electric conductor system of a blade comprises at least one electrical conductor in the blade, in particular a down conductor, which provides an injection site for injection of the input probe signals. The injection site may include a portion of the electrical conductor and at least one ferrite core arranged around the portion of the electrical conductor. The input probe signals can be injected into the electric conductor system via a first electrical injection line and a second electrical injection line. The first electrical injection line can be connected at a first connection point to the portion of the electrical conductor and the second electrical injection line can be connected at a second connection point to the portion of the electrical conductor. The at least one ferrite core is located between the first and second connection point.

The ferrite core can impact the impedance of the enclosed conductor. The ferrite core provides a low impedance in the frequency band (below 1 MHz) of lightning currents whereas it provides a high impedance at typical signal processing frequencies, for example above 30 MHz.

In some embodiments, the first and second electrical injection lines further serve to detect response signals.

In some aspects, the invention also relates to a wind turbine comprising at least one condition monitoring system according to an embodiment of the present invention.

In some aspects, the invention also relates to a method for an operation monitoring of a wind turbine, preferably by a condition monitoring system in accordance with the present invention. The method comprises the following steps:
injecting at least one probe signal into the electric conductor system of a blade of the wind turbine, when the respective blade is aligned with the tower of the wind turbine,
detecting at least one response signal, which is a system response after injection of the probe signal, wherein the system response is obtained from the electric conductor system of the blade and a stationary electric conductor system of the tower, nacelle, and hub of the wind turbine, wherein the stationary conductor system is coupled to the electric conductor system via a capacitive coupling between the blade and the tower, in particular when the blade is aligned with the tower,
wherein injecting the at least one probe signal comprises providing the input probe signals for injection into the electric conductor system of a blade every time the blade aligns with the tower or at predefined intervals or on demand when the blade aligns with the tower, and/or wherein the at least one input probe signal is injected only when the wind turbine operates at a predefined operating condition, for example at a predefined load on the blades or in a predefined operational mode, such as an idle mode, or at a predefined generator output level.

In some embodiments, one or more predefined fingerprint signals are obtained at different loads on the blades, and comparisons with ongoing detected response signals are made with at least one fingerprint signal captured at the current load.

In the following, the invention is described with respect to further details, features and advantages, which are explained in more detail with reference to the figures. The described features and combinations of features, as shown below in the figures and described with reference to the figures, are applicable not only in the respective combination indicated, but also in other combinations or in stand-alone manner, without thereby leaving the scope of the invention.
- Fig. 1a: shows a first example of an embodiment of a condition monitoring device with hard-wired connections and a respective protection device;
- Fig. 1b: shows a second example of an embodiment of a condition monitoring device comprising an inductive measurement device;
- Fig. 1c: shows a third example of an embodiment of a condition monitoring device comprising a signal induction device;
- Fig. 1d: shows a fourth example of an embodiment of a condition monitoring device comprising a signal induction device and an inductive measurement device;
- Fig. 1e: shows a fifth example of an embodiment of a condition monitoring device comprising a waveguide coupler;
- Fig. 2: shows an example of an embodiment of the waveguide coupler of Fig. 1e;
- Fig. 3: shows an example a wind turbine blade comprising an example of a lightning protection system and an embodiment of a condition monitoring device;
- Fig. 4a: shows a first example of a method for an operation monitoring of a wind turbine blade with condition monitoring device, wherein the probe signal is injected into the lightning protection system of the blade;
- Fig. 4b: shows a second example of a method for an operation monitoring of a wind turbine blade with condition monitoring device, wherein the probe signal is injected into the tower conducting unit;
- Fig. 5: shows an example of an embodiment of a condition monitoring system for operation monitoring of a wind turbine;
- Fig. 6: shows schematically a partial view of a wind turbine with three rotor blades and with a condition monitoring device located in the hub and sensor nodes with ferrite cores in the blade root;
- Fig. 7A: shows schematically a side view of the wind turbine of Fig. 6 with a potential fault detected in a blade;
- Fig. 7B: shows schematically an embodiment of the condition monitoring system which is located in the hub and connected via coaxial cables to the ferrite cores in the blade root; and
- Fig. 8: shows schematically a view of the region between the hub and a blade of the wind turbine of Fig. 6.

The figures are of a schematic nature only and are intended solely for the purpose of understanding the invention. Similar elements are provided with the same reference signs in the description of the examples of the embodiments.

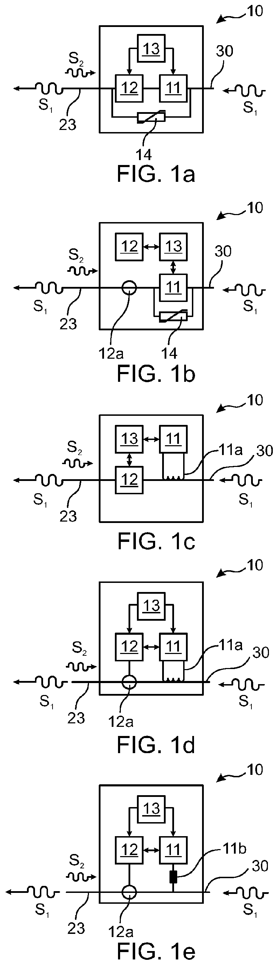

In Fig. 1a to Fig. 1e examples of embodiments of a condition monitoring device 10 are shown. The condition monitoring device 10 according to Fig. 1a to Fig. 1e comprises a signal generation unit 11, a measurement unit 12 and a control unit 13

Faults of the lightning protection system LPS to be detected therewith include, but are not limited to, complete disconnected conductors such as a disconnected down conductor 23, disconnection of lightning receptors 5,6 or expanded metal foil, change of impedance inside the blade, such as in specific conductors or equipotential bonding. Algorithms are designed to analyze the response signals S₂ which provide the information where and when the fault occurred.

Furthermore, the response signal S₂ may identify or predict a potential fault of the lightning protection system LPS of the blade 20 to occur in the future, based on slow changes in the impedance matrix of the lightning protection system LPS of the blade 20, which will cause the measurement responses (system response) to change.

Various algorithms are used to detect faults in the lightning protection system LPS and to locate a potential fault or a slowly degrading connection.

In addition, it is possible to generate a fingerprint signal for a specific blade and apply machine learning & artificial intelligence analysis methods to track significant changes in the response signals S₂ and thereby mapping the changes in the conductive system of the blade 20. A fingerprint signal may e.g. refer to an initial signal measured at an initial installation. Significant changes from the original signature of the fingerprint signal (during a short time instance or during a long time change) can indicate different failure modes in the blade.

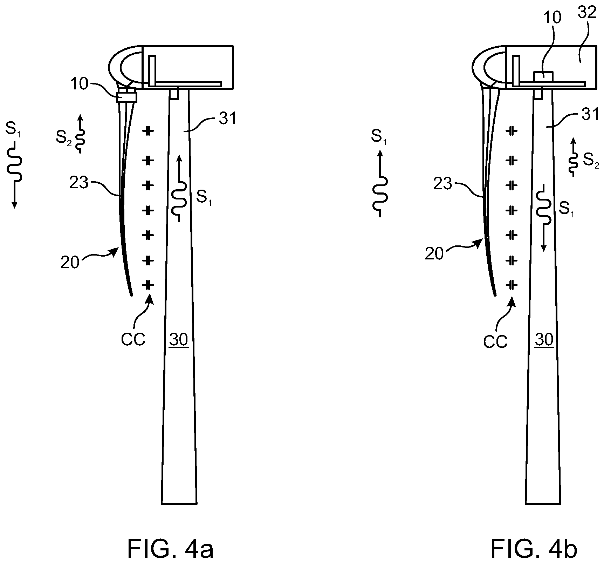

In Fig. 4b an alternative embodiment for an arrangement of the condition monitoring device 10 is shown.

In the embodiment as shown in Fig. 4b, one (single) condition monitoring device 10 is arranged inside the nacelle 32 of the wind turbine.

The probe signal S₁ is generated by the signal generation unit 11 and is injected into the tower conducting unit 30.

Preferably, the tower conducting unit 30 is formed at least sectionally by the exterior of the tower 31 of the wind turbine. In a possible embodiment, the exterior of the tower 31 comprises metal (in particular steel) and/or reinforced concrete, in order to enable a conduction of high frequency signals.

Alternatively or additionally, the tower conducting unit 30 comprises a conductor such as a straight conductive element or a coaxial cable which is arranged at the exterior or inside the tower 31.

This enables to realize essentially the same features and properties regarding a status monitoring of the lightning protection system LPS as described in connection with Fig. 4a, except that here the signal path is directed in the opposite direction. Apart from the signal direction and the arrangement of the condition monitoring device 10 in the nacelle 32, the explanations described for Fig. 4a also apply to this embodiment according to Fig. 4b. The benefit being that we can have only one measurement system looking at three blades in turn.

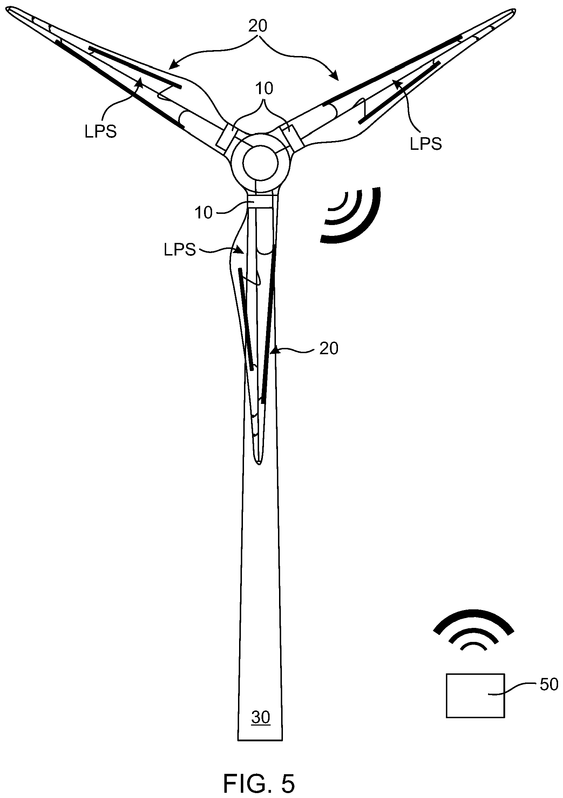

In Fig. 5, a wind turbine comprising a condition monitoring system for operation monitoring is shown.

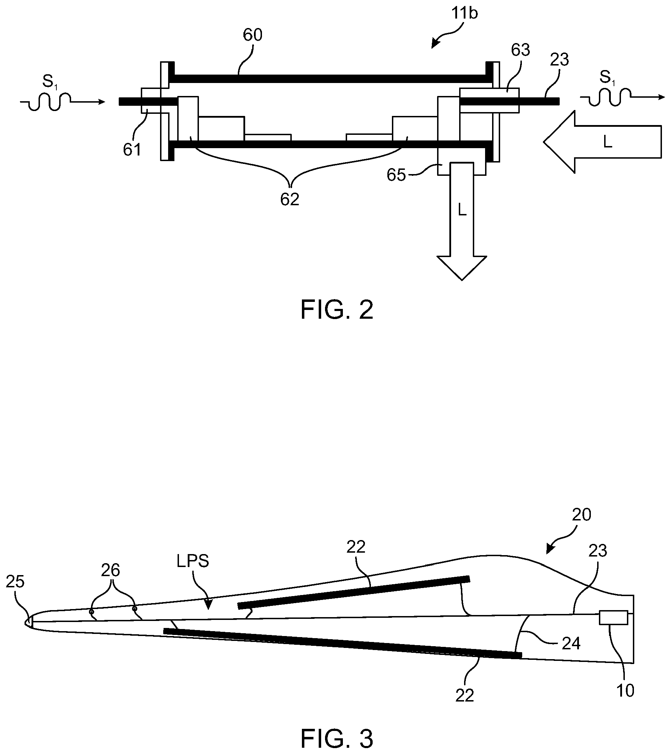

The condition monitoring system comprises in this example three condition monitoring devices 10, where each device 10 is arranged in a respective blade 20 of the wind turbine. Each blade 20 comprises a lightning protection system LPS and the arrangement of the condition monitoring device 10 identical or similar to the one described with respect to Fig. 3.

Further, condition monitoring system comprises a remote data storage and analyzing device 50. The system is configured that the respective control units 13 of the condition monitoring devices 10 may communicate (exchange data) with the remote data storage and analyzing device 50.

Preferably the communication with the remote data storage and analyzing device 50 is a wireless communication.

In a possible embodiment, the data storage and analyzing device 50 is configured as a computer system or as part of a cloud computing system.

The data storage and analyzing device 50 is configured to perform a signal processing of the received response signals S₂ as described in connection with respect to Fig. 4a.

It is also possible, that the data storage and analyzing device 50 is connected to a plurality of wind turbines (or their respective condition monitoring devices 10). Thus, the quantitative assessment of the condition of wind turbines with respective condition monitoring devices can be compared across a fleet of similar wind turbines, e.g., to provide OEMs a better understanding of the failure mechanisms.

In case of an occurring defect at the lightning protection system LPS of a wind turbine an operator can be informed immediately by the data storage and analyzing device 50, e.g. with the help of a sms, a corresponding app or the like.

In an alternative embodiment of the system described with respect to Fig. 5, the wind turbine comprises a single condition monitoring devices 10 in the nacelle 32 as described with respect to Fig. 4b.

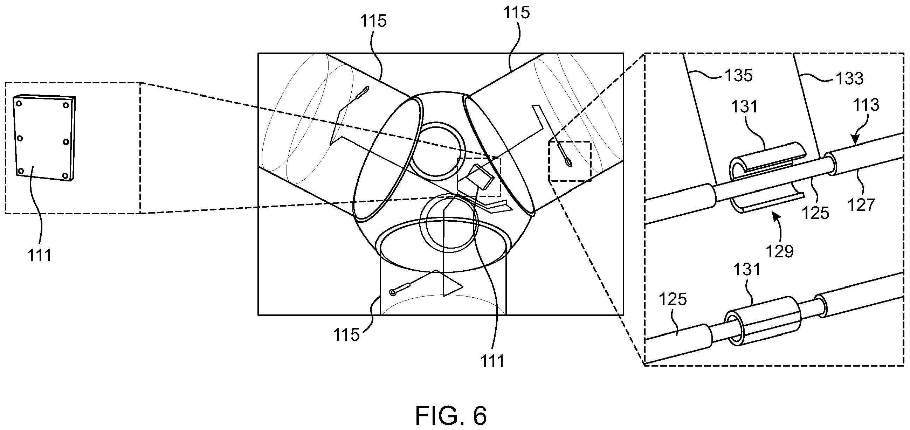

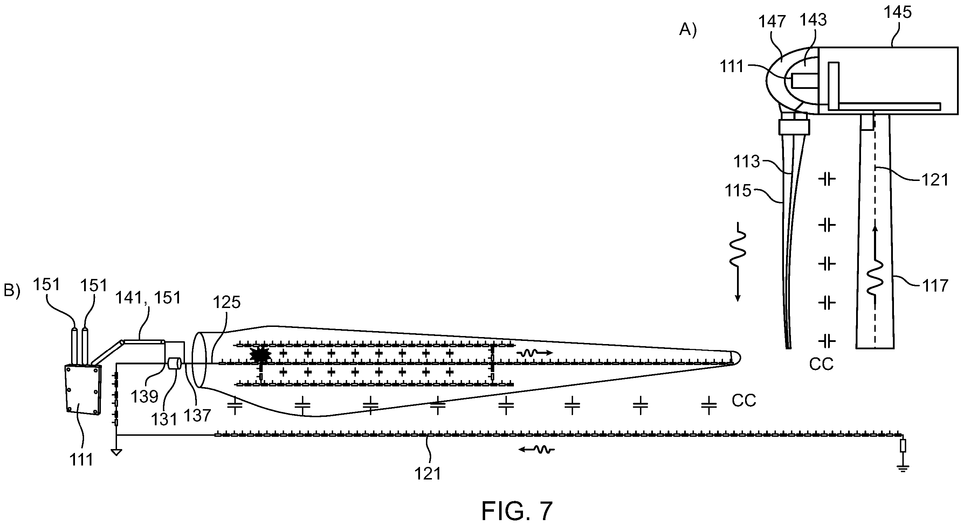

The wind turbine illustrated in Figs. 6 to 8 comprises a condition monitoring system, which includes a controller 111, which is configured to provide the input probe signals for injection into an electric conductor system 113 of a blade 115, in particular when the respective blade 115 is aligned with the tower 117 of the wind turbine. The wind turbine includes three blades 115 in this example. The condition monitoring system also includes at least one measurement device 119, which can be arranged in the controller 111, and which is configured to detect response signals, which is a system response after injection of the probe signals. The system response is in particular generated by the electric conductor system 113 of the blade 115 and the stationary electric conductor system 121, which is coupled to the electric conductor system 113 via a capacitive coupling cc between the blade 115 and the tower 117, in particular when the respective blade 115 is aligned with the tower 117. The condition monitoring system is configured to provide the input probe signals for injection into the electric conductor system of a blade 115 every time when the respective blade 115 is aligned with the tower 117 or at predefined intervals or on demand when the blade 115 is aligned with the tower 117. At least in some embodiments, aligned with the tower 117 means in essence that the blade 115 is pointing downwards as shown in Fig. 7A. There is then a capacitive coupling cc between the electric conductor system 113 of the blade 115 and the stationary electric conductor system 121, which also extends in the tower 117 and which provides a return path for the response signals to the measurement device 119.

The measurement device 119 can receive the detected response signals. The detected response signals can be stored, for example in the measurement device 119, and/or they can be provided to the controller 111 for further processing. Additionally or alternatively, the detected response signals can be provided to an external system for storage and/or further processing, such as the remote data storage and analysing device 50 shown in Fig. 5.

Additionally or alternatively with regard to the provision of the input probe signals for injection into the electric conductor system of a blade 115 every time when the respective blade 115 is aligned with the tower 117 or at predefined intervals or on demand when the blade 115 is aligned with the tower 117, the controller 111 may be configured to provide the input probe signals when the wind turbine operates at a predefined operating condition, for example at a predefined load on the blades 115 or in a predefined operational mode, such as an idle mode, or at a predefined generator output level. The predefined load of the blades 115 can be measured, for example by use of sensors, such as strain sensors attached to the blades 115, or calculated by use of simulations, which might also make use of sensor data obtained from sensors. In particular, the controller 111 can be configured to determine an operating condition of the wind turbine, for example a generated output level or from sensor data. Analysis and fault detection based on the detected response signals might be carried out as described before with regard to Figs. 1 to 5.

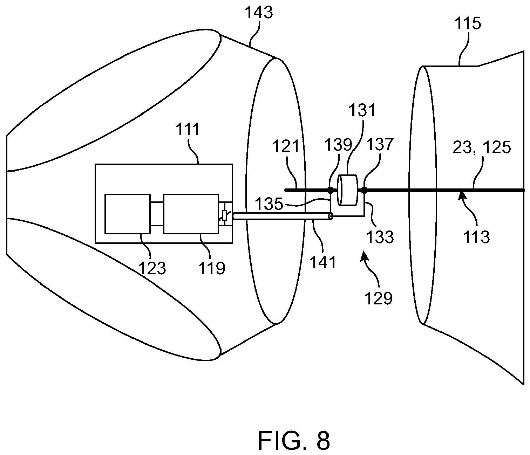

The controller 111 can comprise a signal generator 123 for generating the probe signals. The signal generator 123 may be separate from the measurement device 119, but electrically connected to the measurement device 119 as shown in Fig. 8.

The controller 111 can also comprise a power supply, communication hardware for communicating with components and devices of the wind turbine or with devices and systems outside of the wind turbine, such as the remote data storage and analysing device 50 shown in Fig. 5. The controller 111 can include electrical filters, for example in order to filter the probe signals and/or the detected response signals.

The controller 111 may also comprise a processing unit, in particular for further processing of the detected response signals. The controller 111, in particular the processing unit, can be configured to process the response signals obtained from one blade 115 or from all three blades 115. In some embodiments, the processing unit can be included in the measurement unit 119 of the controller 111, or the processing unit can be a separate unit, which is different from the measurement unit 119.

The controller 111 can analyse or compare the response signals obtained from all blades 115, in particular such response signals, which were obtained at least approximately during the same operational conditions of the wind turbine. In dependence on the detected response signals, the controller 111 can identify a change of a signal pattern in the response signals and determine based on a detected change of the signal pattern at least one of the following: a fault and/or a location of a fault in a blade 115, a time when the fault occurred, a type of the fault.

The electric conduction system 113 can include the lightning protecting system LPS of the respective blade 115. Thus, the electric conduction system 113 can comprise the protection unit 23, including the down conductor 125 of the respective blade 115.

As illustrated in particular in Figs. 6 and 8, a down conductor 125 provides an injection site where the insulation 127 is removed and which serves for injection of the input probe signals into the electric system 113 and for measurement of the response signals. The injection site 129 includes a portion of the electrical conductor, here of the down conductor 125, around which a ferrite core 131 is arranged. In Fig. 6, the ferrite core 131 is depicted as a clamp-on ferrite core and shown for the purpose of illustration in an open state and in a closed state. In operation, the ferrite core 131 is used in the closed state. It can be easily installed when used as a clamp-on ferrite core. It can consist of two half-shells which can be arranged around the isolated part of the down conductor 125 as shown in Fig. 6.

A first electrical injection line 133 is connected at a first connection point 137 to the isolated portion of the electrical down conductor 125 and a second electrical injection line 135 is connected at a second connection point 139 to the portion of the down conductor 125, and the ferrite core 131 is located between the first and second connection point 137, 139.

The first and second electrical injection lines 133, 135 are further connected via electrical connector 141 to the controller 111 and thus to the signal generator unit 123 and the measurement device 119.

As further illustrated in Fig. 8, the conductor to the left of the second connection point 139 can be regarded as part of the stationary electric conductor system 121, which extends through the hub 143, the nacelle 145 and the tower 117, whereas the down conductor 125 to the right of the first connection point 137 extends through the spinner 147 and the blade 115. A conduction coupling cc is obtained between the electric conductor system in the blade 115 and the stationary conductor system in the tower 117 as shown in Figs. 7A and B.

The input probe signals can be injected into the down conductor 125 via the first electrical injection line 133 at the first connection point 137 and via the second electrical injection line 135 at the second connection point 139. The ferrite core can provide a high impedance for the probe signals, thereby preventing a shortcut between the first connection point 137 and the second connection point 137. The ferrite core can provide a low impedance in case of a lightning strike to avoid damage of the system.

As shown, the first and second electrical injection lines 133, 135 further serve to detect response signals which can be detected by the measurement device or unit 119. In some embodiments, the measurement device 119 can comprise a high internal resistance, such as 1 Mega-Ohm. In some embodiments, the signal generation unit 123 can comprise a low internal resistance, such as 50 Ohm.

Each blade 115 has its own connection points 133, 135 and the input probe signals can be provided independently for each blade. Correspondingly, the response signals can be detected independently for each blade 115. The signal generation unit 123 and/or the measurement unit 119 and/or other components of the control unit 111 can be provided separately for each blade 115 or at least some of the units can be used for all blades 115. However, preferably, one main control unit 149 is provided, for example in the nacelle 145, to which all of the units are connected.

In particular, the condition monitoring system can comprise for each blade 115 a corresponding measurement device 119 that is dedicated to the respective blade 119. The measurement device 119 can be located at the blade root, at the junction between hub 143 and the blade 115 or spinner 147, or in the hub 143, nacelle 145 or tower 117. Alternatively, there can be one measurement device 119 for all blades 115, which can be located at located at the junction between the hub 143 and the blades 115, or in the hub 143, nacelle 145 or tower 117. The at least one measurement device 119 can comprise a storage to at least temporarily record detected response signals.

The controller 111, including the signal generation unit 123, can be located in the hub 143, for example.

The controller 111 or the respective signal generation unit 123 can be configured to trigger the injection of the probe signals into the down conductor 125 of a blade 115 when the respective blade 115 is aligned with the tower 117. The tip of the blade 115 then points at least approximately vertically downwards as shown in Fig. 7A, thereby ensuring that a capacitive coupling cc can be obtained between the blade 115 and the tower 117, so that the response signals can be guided to the measurement device 119 via the return path established via the stationary electric conductor system 121, which can include a line to ground.

A unit in the wind turbine or an external unit, such as remote device 50 shown in Fig, 5, and in particular the controller 111 can be configured to compare one or more detected response signals with at least one predetermined fingerprint signal. The fingerprint signal might have been determined based on the same probe signals and during known operating conditions of the wind turbine. Furthermore, if a deviation between a detected response signal with a predetermined fingerprint signal is detected, for example if the deviation exceeds a threshold level, an alarm can be set, which can include that an operator of the wind turbine is informed.

The controller can be configured to determine a time delay between the injection of a probe signal and the detection of the corresponding response signal. An alarm can be output if the time delay exceeds a threshold value.

In operation, input probe signals can be injected into the down conductor 125 of each blade 115, in particular when the respective blade 115 is aligned with the tower 117. Each blade 115 has an individual response traveling back, in the form of at least one response signal, which travels back through the tower 117, which is coupled to the blade 115 due to capacitive coupling cc. Each impedance change in a blade 115 results in a partial reflection included in the response signal. Repetitive measurements after the installation of the wind turbine provide the signature of a healthy blade for each blade. Such a measured response signal can serve as a fingerprint signal for the respective blade 115. In case of a damage, the change of impedance would cause a change in the detected response signal. Thus, a defect in a blade 115 can be determined based on a comparison between the fingerprint signal and a detected response signal for the respective blade 115.

As illustrated in Fig. 7B, the condition monitoring system 111 can be located in the hub 143 and connected via coaxial cables 151 to the ferrite cores 131 in the blade root.

At least in some embodiments, a method for an operation monitoring of the wind turbine as shown in Figs. 6 to 8, can include the steps of
injecting at least one probe signal into the electric conductor system 113 of a blade 115, when the respective blade is aligned with the tower 117,
detecting at least one response signal, which is a system response after injection of the probe signal, wherein the system response is obtained from the electric conductor system 113 of the blade and the stationary electric conductor system 121, wherein the stationary conductor system 121 is coupled to the electric conductor system 113 via a capacitive coupling cc between the blade 115 and the tower 117, in particular when the blade 115 is aligned with the tower 117.

The injecting step of the at least one probe signal may comprise providing the input probe signals for injection into the electric conductor system 113 of the blade 115 every time the blade 115 aligns with the tower 117 or at predefined intervals or on demand when the blade 115 aligns with the tower 117.

The injecting step of the at least one probe signal may only be carried out when the wind turbine operates at a predefined operating condition, for example at a predefined load on the blades or in a predefined operational mode, such as an idle mode, or at a predefined generator output level. Thus, the condition monitoring system can be configured to provide the input probe signals only when the wind turbine operates at the predefined operating condition.

In some embodiments, the method includes comparing a detected response signal from a blade 115 with a predetermined fingerprint signal for the blade 115, and detecting a defect in the blade based on the comparing of the response signal with the fingerprint signal.

In some embodiments, the method includes determining the fingerprint signal for a blade 115 after installation of the blade 115 on the wind turbine by detecting at least one response signal in response to the injection of at least one input probe signal.

### Reference signs

- 10: condition monitoring device
- 11: signal generation unit
- 11a: signal induction device
- 11b: waveguide coupler
- 12: measurement unit
- 13: control unit
- 20: blade
- 21: blade shell
- 22: CFRP structural elements connected to the protection unit
- 23: protection unit (down conductor)
- 24: electrical conductors
- 25: protection unit (tip receptor)
- 26: protection unit (side receptor)
- 30: tower conducting unit
- 31: tower
- 32: nacelle
- 50: (remote) data storage and analyzing device
- 60: waveguide chassis
- 61: RF connector
- 62: transition elements
- 63: insulator
- 65: chassis ground
- L: destructive lightning impulse current
- S₁: probe signal
- S₂: response signal
- LPS: lightning protection system
- cc: capacitive coupling
- 111: controller
- 113: electrical conductor system
- 115: blade
- 117: tower
- 119: measurement device
- 121: stationary electric conductor system
- 123: signal generation unit
- 125: down conductor
- 127: insulation
- 129: injection site
- 131: ferrite core
- 133: first electrical injection line
- 135: second electrical injection line
- 137: first connection point
- 139: second connection point
- 141: electrical connector
- 143: hub
- 145: nacelle
- 147: spinner
- 149: main control unit
- 151: coaxial cable

## Claims

1. A condition monitoring system for a wind turbine,
wherein the wind turbine comprises a tower, a nacelle, a hub, and wind turbine blades attached to the hub, wherein each blade comprises an electric conductor system, in particular a lightning protection system,
wherein the tower, nacelle and hub comprise a stationary electric conductor system, in particular including an electric grounding system of the wind turbine,
wherein the condition monitoring system comprises:
a controller which is configured to provide input probe signals for injection into the electric conductor system of a blade, when the respective blade is aligned with the tower, and
at least one measurement device configured to detect response signals, which is a system response after injection of the probe signals, wherein the system response is generated by the electric conductor system of the blade and the stationary electric conductor system, which is coupled to the electric conductor system via a capacitive coupling between the blade and the tower, in particular when the blade is aligned with the tower, and
wherein the condition monitoring system is configured to provide the input probe signals for injection into the electric conductor system of a blade every time the blade aligns with the tower or at predefined intervals or on demand when the blade aligns with the tower.

2. The condition monitoring system of claim 1,
wherein the at least one measurement device is configured to provide the detected response signals to the controller for further processing.

3. A condition monitoring system for a wind turbine, in particular in accordance with any one of the preceding claims,
wherein the wind turbine comprises a tower, a nacelle, a hub, and wind turbine blades attached to the hub, wherein each blade comprises an electric conductor system, in particular a lightning protection system,
wherein the tower, nacelle and hub comprise a stationary electric conductor system, in particular including an electric grounding system of the wind turbine,
wherein the condition monitoring system comprises:
a controller which is configured to provide input probe signals for injection into the electric conductor system of a blade, when the respective blade is aligned with the tower,
at least one measurement device configured to detect response signals, which is a system response after injection of the probe signals, wherein the system response is generated by the electric conductor system of the blade and the stationary electric conductor system, which is coupled to the electric conductor system via a capacitive coupling between the blade and the tower, in particular when the blade is aligned with the tower, and
wherein the condition monitoring system is configured to provide the input probe signals when the wind turbine operates at a predefined operating condition, for example at a predefined load on the blades or in a predefined operational mode, such as an idle mode, or at a predefined generator output level.

4. The condition monitoring system of any one of the preceding claims,
wherein the controller is configured to determine an operating condition of the wind turbine.

5. The condition monitoring system of any one of the preceding claims,
wherein the controller, in particular a measurement unit of the controller, is configured to process the response signals from all blades, and/or
wherein the condition monitoring system is configured to inject response signals into each blade and to detect response signals for each blade, wherein, optionally, the system, in particular the controller, is configured to compare measurements from all blades and to indicate a failure in one blade, if a deviation in the measurements from the one blade in view of the measurements from the remaining blades is detected.

6. The condition monitoring system of any one of the preceding claims,
wherein the controller is configured to analyse or compare the response signals from all blades, wherein, optionally, the controller is configured to analyse or compare only response signals which were obtained at least approximately during the same operational conditions of the wind turbine.

7. The condition monitoring system of any one of the preceding claims,
wherein the controller is configured to determine, based on the detected response signals and in particular in dependence on the detection of a change of a signal pattern in the response signals, at least one of the following:
at least approximately a location of a fault,
a time when the fault occurred,
a type of the fault.

8. The condition monitoring system of any one of the preceding claims,
wherein an injection device is electrically connected to the controller and configured to receive the probe pulses from the controller and to inject the probe pulses into the electric conductor system of the blade, when it is aligned with the tower, wherein, optionally, the injection device is included in the measurement device.

9. The condition monitoring system of any one of the preceding claims,
wherein the condition monitoring system comprises for each blade a measurement device that is dedicated to the respective blade, wherein, optionally, the measurement device is located at the blade root, at the junction between hub and blade, or in the hub, nacelle or tower.

10. The condition monitoring system of any one of the claims 1 to 8,
wherein the condition monitoring system comprises one measurement device for all blades, wherein, optionally, the measurement device is located at the junction between hub and blades, or in the hub, nacelle or tower.

11. The condition monitoring system of any one of the preceding claims,
wherein the at least one measurement device is configured to record the detected response signals.

12. The condition monitoring system of any one of the preceding claims,
wherein the controller comprises a signal generation unit which is configured to generate the input probe signals.

13. The condition monitoring system of any one of the preceding claims,
wherein the controller is located in the hub, in particular in a cabinet.

14. The condition monitoring system of any one of the preceding claims,
wherein the controller is configured to trigger the injection of the probe signals into the electric conductor system of the blade when the respective blade is aligned with the tower.

15. The condition monitoring system of any one of the preceding claims,
wherein the controller is configured to compare the response signal with a predetermined fingerprint signal, and, optionally, to set an alarm if the response signal deviates from the fingerprint signal.

16. The condition monitoring system of any one of the preceding claims,
wherein the controller is configured to determine a time delay between the injection of a probe signal and the detection of the corresponding response signal, wherein, optionally, an alarm is output if the time delay exceeds a threshold value.

17. The condition monitoring system of any one of the preceding claims,
wherein the electric conductor system of a blade comprises at least one electrical conductor in the blade, in particular down conductor, which provides an injection site for injection of the input probe signals, wherein the injection site includes a portion of the electrical conductor and at least one ferrite core arranged around the portion of the electrical conductor,
wherein the input probe signals are injected into the electric conductor system via a first electrical injection line and a second electrical injection line, wherein the first electrical injection line is connected at a first connection point to the portion of the electrical conductor and the second electrical injection line is connected at a second connection point to the portion of the electrical conductor, wherein the at least one ferrite core is located between the first and second connection point.

18. The condition monitoring system of claim 17,
wherein the first and second electrical injection lines further serve to detect response signals.

19. A wind turbine comprising at least one condition monitoring system according to any one of the preceding claims.

20. A method for an operation monitoring of a wind turbine, preferably by a condition monitoring system in accordance with any one of the claims 1 to 18, wherein the method comprises the following steps:
injecting at least one probe signal into the electric conductor system of a blade of the wind turbine, when the respective blade is aligned with the tower of the wind turbine,
detecting at least one response signal, which is a system response after injection of the probe signal, wherein the system response is obtained from the electric conductor system of the blade and a stationary electric conductor system of the tower, nacelle, and hub of the wind turbine, wherein the stationary conductor system is coupled to the electric conductor system via a capacitive coupling between the blade and the tower, in particular when the blade is aligned with the tower,
wherein injecting the at least one probe signal comprises providing the input probe signals for injection into the electric conductor system of a blade every time the blade aligns with the tower or at predefined intervals or on demand when the blade aligns with the tower, and/or
wherein the at least one input probe signal is injected when the wind turbine operates at a predefined operating condition, for example at a predefined load on the blades or in a predefined operational mode, such as an idle mode, or at a predefined generator output level.
